# EUROPEAN PATENT SPECIFICATION

(11) **EP 0 752 711 B1**
(45) Date of publication and mention of the grant of the patent: **06.10.1999**
(21) Application number: 95110616.0
(22) Date of filing: 07.07.1995
(51) Int. Cl.: G21K 4/00, C09K 3/16

(54) **Antistatic X-ray intensifying screen comprising fluoroalkylsulfonate salts**
Antistatischer Verstärkungsschirm für Röntgenstrahlen mit Fluoroalkylsulfonat-Salzen
Ecran intensificateur de rayons X antistatique comprenant des sels fluoroalkylsulfonates

(43) Date of publication of application: 08.01.1997
(73) Proprietor: MINNESOTA MINING AND MANUFACTURING COMPANY, St. Paul, Minnesota 55133 (US)
(72) Inventor: Benso, Paolo, I-17016 Ferrania (Savona) (IT); Lamanna, William M., St. Paul, Minnesota 55133 (US)
(74) Representative: Allaix, Roberto, Dr.

(56) References cited:
- EP-A- 0 170 529
- DATABASE WPI Section Ch, Week 8739 Derwent Publications Ltd., London, GB; Class A89, AN 87-274931 & JP-A-62 192 738 ( KONISHIROKU PHOTO KK) , 24 August 1987

## Description

### FIELD OF THE INVENTION

The present invention relates to novel radiographic intensifying screens having improved antistatic properties, more particularly to radiographic intensifying screens comprising highly fluorinated alkylsulfonate salts.

### BACKGROUND OF THE ART

It is known in the art of medical radiography to employ intensifying screens to reduce the X-ray dosage to the patient. Intensifying screens absorb the X-ray radiations and emit electromagnetic radiations which can be better absorbed by silver halide emulsion layers. Another approach to reduce the X-ray dosage to the patient is to coat two silver halide emulsion layers on the opposite sides of a support to form a duplitized radiographic element.

Accordingly, it is a common practice in medical radiography to use a radiographic assembly consisting of a duplitized radiographic element interposed between a pair of front and back screens.

The typical structure of an intensifying screen comprises a support and a phosphor layer coated thereon. The phosphor layer comprises a fluorescent substance able to emit light when exposed to X-ray and a binder. Additionally, a primer layer is sometimes provided between the fluorescent layer and the substrate to assist in bonding the fluorescent layer to the substrate, and a reflective layer is sometimes provided between the substrate (or the primer) and the fluorescent layer. Finally, a protective layer for physically and chemically protecting the screen is usually provided on the surface of the fluorescent layer.

Typically, polymer materials, such as polyethylene terephthalate, or paper are used as support for the intensifying screen. Intensifying screens obtained from such supports easily can be electrostatically charged on its surface due to repeated physical contacts with other surfaces of different materials during their use. This static electrification can promote some adverse effects in practical operations of radiation image recording and reproducing.

For example, when the surface of an intensifying screen is charged, it may adhere to another screen or to a radiographic film coupled with it during the exposure of the patient to X-rays. The resulting image provided by the film can suffer of static marks when discharge of the panel takes place. The static marks are produced in the form of over-exposed portions on the radiographic film in contact with the intensifying screen, corresponding to areas in which discharge of the static electricity takes place. Static marks appearing on radiographic films are disadvantageous, in particular in medical radiography for diagnosis, where static marks cause problems in the analysis of the resulting photographic image.

A number of patents and patent applications have been issued on this problem, offering a number of solutions.

JP 03/255,400 discloses an intensifying screen comprising a protective layer of fine particles of metal oxides dispersed in a binder.

JP 03/252,599 discloses an intensifying screen comprising a protective layer consisting of an N-heterocycle compound dispersed in cellulose acetate.

JP 03/237,399 discloses an intensifying screen comprising an intermediate conducting layer between the support and the fluorescent layer consisting of carbon black and/or metals dispersed in a binder.

EP 223,062 discloses an intensifying screen comprising a intermediate or back layer comprising metal oxides, carbon black, or conductive organic compounds.

US 5,151,604 discloses an intensifying screen comprising a subbing layer interposed between the support and a fluorescent layer comprising conductive ZnO whiskers having average diameters of 0.3 to 3.0 µm and average lengths of 3 to 150 µm.

US 4,943,727 discloses an intensifying screen comprising a protective layer having on one or both surfaces thereof a metallic film obtained by evaporating a metal compound selected among Ni, Cr, Au, Sn, Al, Cu, and Zn.

US 4,711,827 discloses an intensifying screen comprising an acrylonitrile-styrene copolymer composition as protective top-coat.

US 4,666,774 discloses an intensifying screen with a protective layer of a fluorinated polymer comprising an antistatic agent selected from the group of alkylphosphate mixtures, quatemized fatty imidazoline derivatives, and ethoxylated amines.

US 4,983,848 discloses an intensifying screen having a top-coat layer consisting of polyamide derivatives, such as, nylon 6,6, nylon 6, amorphous nylon and the like.

US 4,855,191 discloses an intensifying screen with an antistatic layer comprising a conductive polymer layer, such as acrylic resins or polysiloxanes.

EP 377,470 discloses an intensifying screen comprising an antistatic top-coat layer having inorganic salts dispersed in a binder. Preferred inorganic salts are, for example, LiCI, NaCI, NaBr, NaNO₃, Na₃PO₄, Csl, MgBr₂, BaBr₂, Bal₂, AlBr₃.

US 4,582,781 discloses an antistatic composition comprising a hydrophilic binder, a polymeric surfactant having polymerized oxyalkylene monomers and inorganic salts selected from the group of tetrafluoroborates, perfluoroalkyl carboxylates, hexafluorophosphates and perfluoroalkyl sulfonates for use in a silver halide photographic element.

US 5,176,943 discloses an antistatic composition comprising an ionic perfluoro surfactant, a nonionic perfluoro surfactant, and a non-fluorinated, copolymerizable, radiation curable prepolymer for use in an optical recording media.

In spite of this activity to solve the long-standing problem of static marks, a definitive solution is still to be reached. It is an object of the present invention to contribute to the reduction of static marks on photographic films, particularly those intended to be used in medical radiography.

### SUMMARY OF THE INVENTION

The present invention relates to an X-ray intensifying screen comprising a support, a fluorescent layer coated thereon which comprises fluorescent phosphor particles dispersed in a binder, and a protective top-coat layer covering said fluorescent layer, characterized in that at least one of said fluorescent and top-coat layers comprises at least one salt selected from the group consisting of fluoroalkylsulfonate salts.

### DETAILED DESCRIPTION OF THE INVENTION

Accordingly, the present invention relates to an X-ray intensifying screen comprising a support, a fluorescent layer coated thereon which comprises fluorescent phosphor particles dispersed in a binder, and a protective top-coat layer covering said fluorescent layer, characterized in that at least one of said fluorescent and top-coat layers comprises at least one salt selected from the group consisting of fluoroalkylsulfonate salts.

The fluoroalkylsulfonate salts useful in the intensifying screen of the present invention can be represented by the following formula:

Rf-SO₃⁻ M⁺

wherein M is an organic or inorganic cation, and Rf is a highly fluorinated alkyl group having 1 to 18 carbon atoms.

Preferably, M is an alkali metal (e.g., Li, K, and Na), an alkaline-earth metal (e.g., Ca, Mg, and Sr), or a nitrogen onium cation.

In the above formula, the highly fluorinated alkyl group Rf is a monovalent fluorinated saturated aliphatic radical containing at least one carbon atom. Where said radical contains a plurality of carbon atoms in a skeletal chain, such chain may be branched or cyclic but preferably is a straight chain. Said skeletal chain of carbon atoms can be interrupted by hetero atoms or radicals, such as divalent oxygen or trivalent nitrogen or hexavalent sulfur atoms, each of which is bonded only to carbon or fluorine atoms, but preferably where such hetero moieties are present, such skeletal chain does not contain more than one said hetero moiety for every two carbons atoms. An occasional carbon-bonded hydrogen atom, bromine atom, or chlorine atom may be present; where present, however, they preferably are present not more than once for every two carbon atoms. Thus, the non-skeletal valence bonds are preferably carbon-to-fluorine bonds, that is, Rf is preferably perfluorinated. The total number of carbon atoms in Rf can vary and be, for example, 1 to 18, more preferably 1 to 12, and most preferably 1 to 8. Where Rf is or comprises a cyclic structure, such structure preferably has 5 or 6 ring members, 1 or 2 of which can be said hetero atoms, e.g., oxygen, nitrogen, and/or sulfur. The radical Rf is also one which is free of ethylenic or other carbon-to-carbon unsaturation, that is, it is a saturated aliphatic, cycloaliphatic, or heterocyclic radical. Examples of Rf radicals are fluorinated alkyl, e.g. CF₃-, and alkoxyalkyl, e.g., CF₃OCF₂-, said radicals being preferably perfluorinated, straight chain aliphatic radicals consisting only of carbon and fluorine atoms and having 1 to 8 carbon atoms therein.

According to the scope of the present invention when the term "group" is used to describe a chemical compound or substituent, the described chemical material includes the basic group and that group with conventional substitution. Where the term "moiety" is used to describe a chemical compound or substituent only an unsubstituted chemical material is intended to be included.

According to a preferred aspect of the present invention said fluoroalkylsulfonate salt is a fluoroalkylsulfonate lithium salt.

According to a more preferred embodiment of the present invention, the fluoroalkylsulfonate lithium salt useful in the intensifying screen of the present invention can be represented by the following formula:

Rf-SO₃⁻ Li⁺

wherein Rf is a highly fluorinated alkyl group having 1 to 8 carbon atoms.

A description of the above mentioned compounds and their synthesis can be found in US 3,476,753, 4,582,781, and 5,176,943. Examples of fluoroalkylsulfonate salts are illustrated below.

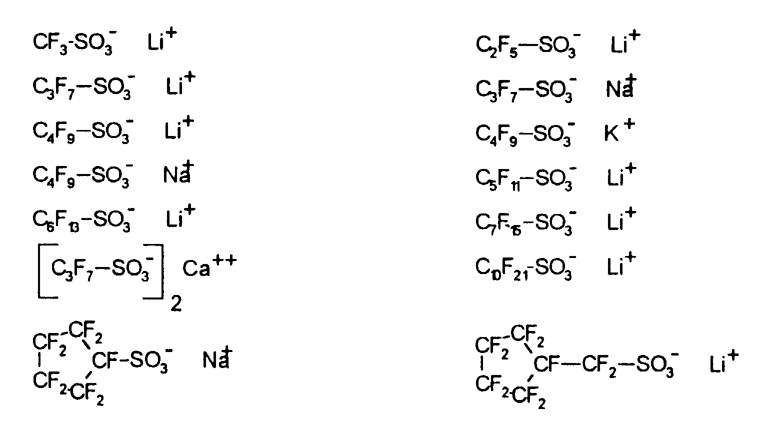

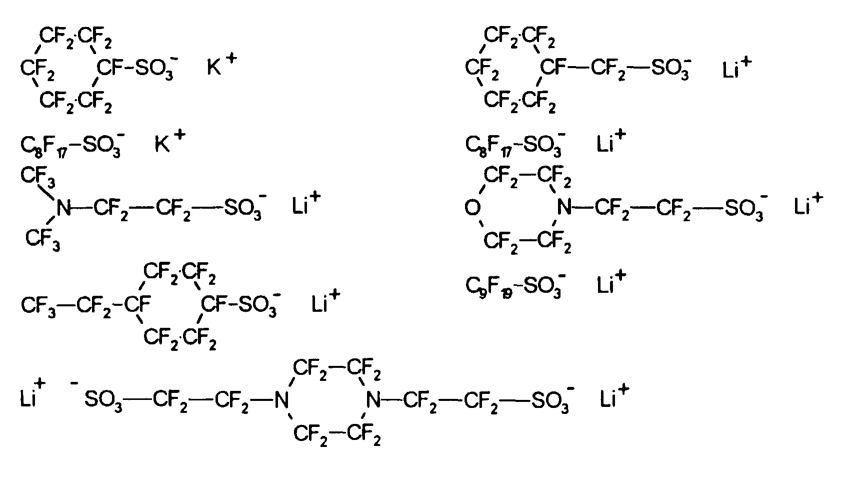

The fluoroalkylsulfonate salts are employed at a coating weight of from 0.01 to 20 g/m², preferably from 0.05 to 10 g/m², more preferably from 0.1 to 5 g/m². The fluoroalkylsulfonate salts can be added to the fluorescent layer, to the protective top-coat layer or both. When the fluoroalkylsulfonate salts are added to both the fluorescent and protective top-coat layers, it is preferred that the ratio of the fluoroalkylsulfonate salt coating weight in the fluorescent and top-coat layer is from 10:1 to 1:10, preferably from 6:1 to 1:6.

The intensifying screen of this invention comprises a fluorescent layer comprising a binder and at least one phosphor dispersed therein. The fluorescent layer is typically formed by dispersing the phosphor(s) in an organic solvent solution of the binder to prepare a coating dispersion having the desired phosphor to binder weight ratio, and then applying the coating dispersion by a conventional coating method to form a uniform layer. Although the fluorescent layer itself can be an intensifying screen when the fluorescent layer is self-supporting, the fluorescent layer is generally provided on a substrate to form an intensifying screen.

A protective layer for physically and chemically protecting the fluorescent layer is usually provided on the surface of the fluorescent layer. Additionally, a primer layer is sometimes provided on the substrate to improve the bond between the fluorescent layer and the substrate, and a reflective layer is sometimes provided between the substrate (or the primer) and the fluorescent layer.

The phosphors used in the intensifying screen of the present invention have an emission maximum wavelength in the ultraviolet, blue, green, red or infrared region of the electromagnetic spectrum. More preferably, the phosphors emit radiations in the ultraviolet, blue and green regions of the electromagnetic spectrum.

The green emitting phosphors should emit radiation having more than about 80% of its spectral emission above 480 nm and its maximum of emission in the wavelength range of 530-570 nm. Green emitting phosphors which may be used in the intensifying screen of the present invention include rare earth activated rare earth oxysulfide phosphors of at least one rare earth element selected from yttrium, lanthanum, gadolinium and lutetium, rare earth activated rare earth oxyhalide phosphors of the same rare earth elements, a phosphor composed of a borate of the above rare earth elements, a phosphor composed of a phosphate of the above rare earth elements and a phosphor composed of tantalate of the above rare earth elements. These rare earth green emitting phosphors have been extensively described in the patent literature, for example in US Patents 4,225,653, 3,418,246, 3,418,247, 3,725,704, 3,617,743, 3,974,389, 3,591,516, 3,607,770, 3,666,676, 3,795,814, 4,405,691, 4,311,487 and 4,387,141. These rare earth phosphors have a high X-ray absorbing power and high efficiency of light emission when excited with X-ray and enable radiologists to use substantially lower X-ray dosage levels. Particularly suitable phosphors for use in the intensifying screen of the present invention are terbium or terbium-thulium activated rare earth oxysulfide phosphors represented by the following general formula:

(Ln_{1-a-b}, Tbₐ, Tm_{b})₂O₂S

wherein Ln is at least one rare earth element selected from lanthanum, gadolinium and lutetium, and a and b are numbers meeting the conditions 0.0005 ≤ a ≤ 0.09 and 0 ≤ b ≤ 0.01, respectively, and terbium or terbium-thulium activated rare earth oxysulfide phosphors represented by the following general formula:

(Y_{1-c-a-b}, Ln_{c}, Tbₐ, Tm_{b})₂O₂S

wherein Ln is at least one rare earth element selected from lanthanum, gadolinium and lutetium, and a, b and c are numbers meeting the conditions 0.0005 ≤ a ≤ 0.09, 0 ≤ b ≤ 0.01 and 0.65 ≤ c ≤ 0.95, respectively. In the formulae, it is preferred that the value of b meets the condition 0 < b ≤ 0.01.

The UV-blue emitting phosphors emit radiation having more than about 80% of their spectral emission below 450 nm and their maximum emission in the wavelength range of 300-400 nm. UV-blue emitting phosphors which may be used in the intensifying screen of the present invention include UV-blue emitting phosphors known in the art such as lead or lanthanum activated barium sulfate phosphors, barium fluorohalide phosphors, lead activated barium silicate phosphors, gadolinium activated yttrium oxide phosphors, barium fluoride phosphors, alkali metal activated rare earth niobate or tantalate phosphors. UV-blue emitting phosphors are described for example in BE 703,998 and 757,815, in EP 202,875 and by Buchanan et al., J. Applied Physics, vol. 9, 4342-4347, 1968, and by Clapp and Ginther, J. of the Optical Soc. of America, vol. 37, 355-362, 1947. Particularly suitable UV-blue emitting phosphors for use in the intensifying screen of the present invention are those represented by the following general formula:

(Y_{1-2/3x-1/3y}, Srₓ, Li_{y}) TaO₄

wherein x and y are numbers meeting the conditions 10⁻⁵ ≤ x ≤ 1 and 10⁻⁴ ≤ y ≤ 0.1 as described in EP 202,875.

References to other well known kinds of light emitting phosphors can be found in Research Disclosure, Vol. 184, August 1979, Item 18431, Section IX.

The binder employed in the fluorescent layer of the intensifying screen of the present invention, can be, for example, binders commonly used in forming layers: gum arabic, protein such as gelatin, polysaccharides such as dextran, organic polymer binders such as polyvinylbutyral, polyvinylacetate, nitrocellulose, ethylcellulose, vinylidene-chloride-vinylchloride copolymer, acrylates such as polymethylmethacrylate, and polybutylmethacrylate, vinylchloride-vinylacetate copolymer, polyurethanes, cellulose acetate butyrate and polyvinyl alcohol.

Generally, the binder is used in an amount of 0.01 to 1 part by weight per one part by weight of the phosphor. However, from the viewpoint of the sensitivity and the sharpness of the screen, the amount of the binder should preferably be minimized. Accordingly, in consideration of both the sensitivity and the sharpness of the screen and the ease of application of the coating dispersion, the binder is preferably used in an amount of 0.03 to 0.2 parts by weight per one part by weight of the phosphor. The thickness of the fluorescent layer is generally within the range of 10 µm to 1 mm.

In the intensifying screen of the present invention, the fluorescent layer is generally coated on a substrate. As the substrate, various materials such as polymeric material, glass, wool, cotton, paper and metal can be used. From the viewpoint of handling the screen, the substrate should preferably be processed into a sheet or a roll having flexibility. In this connection, the substrate is preferably a plastic film (such as a cellulose triacetate film, polyester film, polyethylene terephthalate film, polyamide film and polycarbonate film), ordinary paper, or processed paper (such as a photographic paper, baryta paper, resin-coated paper, pigment-containing paper which contains a pigment such as titanium dioxide). The substrate may have a primer layer on one surface thereof (e.g., the surface on which the fluorescent layer is provided) for holding the fluorescent layer tightly. As the material of the primer layer, an ordinary adhesive or primer can be used. In providing a fluorescent layer on the substrate (or on the primer layer or on the reflective layer), a coating dispersion comprising the phosphor dispersed in a binder may be directly applied to the substrate (or to the primer layer or to the reflective layer).

Between the phosphor layer and the substrate can be interposed a reflective layer to increase the amount of radiation emitted by the screen. The reflective layer may be composed of any reflective agent or pigment dispersed in a suitable binder. Pigments such as TiO2, ZrO2, MgO, ZnO, Al2O3, PbCO3, MgCO3, PbSO4, calcium titanate, potassium titanate are already known and widely used. The reflective layer can comprise any binder, such as gelatin, gelatin derivatives, polyurethane, polyvinylacetate and polyvinylalcohol. To improve the reflecting power of the substrate, the base support may be metallized by coating a thin layer of a reflective metal, such as, for example, aluminum. The thickness of the reflective layer is generally greater than 10 µm, preferably in the range of from 15 to 40 µm.

In the intensifying screen of the present invention, a protective layer for physically and chemically protecting the fluorescent layer is generally provided on the surface of the fluorescent layer intended for exposure (on the side opposite the substrate). When the fluorescent layer is self-supporting, the protective layer may be provided on both surfaces of the fluorescent layer. The protective layer may be provided on the fluorescent layer by directly applying thereto a coating dispersion to form the protective layer thereon, or may be provided thereon by laminating or adhering thereto the protective layer formed beforehand. As the material of the protective layer, a conventional polymeric material for a protective layer such a nitrocellulose, ethylcellulose, cellulose acetate, polyester and polyethyleneterephthalate can be used.

The intensifying screen of the present invention may be colored with a dye. Also, the fluorescent layer may contain a white powder dispersed therein. By using a dye or a white powder in the fluorescent layer, an intensifying screen which provides an image of high sharpness can be obtained.

The invention will be described hereinafter by reference to the following examples, which by no means are intended to restrict the scope of the claimed invention.

### EXAMPLE 1

A set of radiographic screens was prepared by coating a dispersion of a green emitting Gd2O2S:Tb phosphor manufactured by Nichia Kagaku Kogyo K.K. under the trade name NP-3010-33M with an average particle grain size of 6.5 µm in a hydrophobic polymer binder solution, on a polyester support having a thickness of 250 µm. The composition of the dispersion was:

| | |
|---|---|
| Gd₂O₂S:Tb | g 1000 |
| methylacrylate-ethylacrylate copolymer | g 63 |
| vinyl chloride-vinyl propionate copolymer | g 62 |
| acetone | g 69 |
| ethyl acetate | g 157 |
| methyl isobutyl ketone | g 25 |

The resulting fluorescent layer had a phosphor coverage of about 433 g/m² and a dry thickness of 110 µm. Between the phosphor layer and the support a reflective layer of TiO₂ particles in a polyurethane binder was coated at a thickness of 25 µm. The screens were overcoated with a cellulose triacetate and polyvinylacetate protective layer of 5 µm at a coating weight of about 5 to 6 g/m². After coating, the screens were dried ovemight in an oven at 40°C. During the coating, different amounts of C₄F₉SO₃⁻Li⁺ were added to the fluorescent layer and/or to the protective layer according to the following Table 1.

**Table 1**

| Concentration of compound | | | | | |
|---|---|---|---|---|---|
| Sample | Into Dry Fluorescent Layer | | Into Dry Protective Layer | | Fluorescent + Protective Layer |
| | % by volume | g/m² | % by volume | g/m² | g/m² |
| Reference Screen | | | | | |
| R1 | - | - | - | - | - |

| C₄F₉SO₃⁻Li⁺ | | | | | |
|---|---|---|---|---|---|
| N1 | 0.90 | 0.96 | - | - | 0.96 |
| N2 | - | - | 43 | 2.13 | 2.13 |
| N3 | 0.90 | 0.96 | 43 | 2.13 | 3.09 |

All the samples were then evaluated according to the following tests.

### CHARGE DECAY TIME TEST

According to this test the static charge dissipation of each of the screens was measured. The screens were conditioned at 25% relative humidity and T=21°C for 15 hours. The charge decay time was measured with a Charge Decay Test Unit JCI 155 (manufactured by John Chubb Ltd., London). This apparatus deposits a charge on the surface of the screen by a high voltage corona discharge and a fieldmeter allows observation of the decay time of the surface voltage. The lower the time, the better the antistatic properties of the screen. To prevent the charge decay behavior of the tested surface from being influenced by the opposite surface, the opposite surface was grounded by contacting it with a metallic back surface.

### SURFACE RESISTIVITY TEST

The surface resistivity of the sample screen surface was measured according to ASTM D257 with a Hewlett Packard model 16008A resistivity cell connected with a Hewlett Packard model 4329A high resistance meter. The lower the value, the better the antistatic protection of the screen.

### SLIPPERINESS TEST

This test was performed with a Lhomargy apparatus. It consists of a slide moving on a film supported by the screen to be tested at a speed of about 15 cm/min. A force transducer connected to the slide transforms the applied force into an amplified DC voltage which is recorded on a paper recorder. The force applied to start the sliding movement represents the value of static slipperiness. The movement of the slide is not continuous. The discontinuity of the movement can be measured (in terms of slipperiness difference) from the graph of the paper recorder. This value represents the dynamic slipperiness. It was noted that the more the movement was discontinuous (i.e., the higher the value of slipperiness difference), the better was the performance of the screen. The test was performed with a 3M Trimax™ XD/A Plus radiographic film.

The results of the above mentioned tests are summarized in the following Table 2.

**Table 2**

| Sample | Decay Time | Surface Resistivity | Slipperiness Test | | | |
|---|---|---|---|---|---|---|
| | | | 50% Rel. Humidity | | 85% Rel. Humidity | |
| | | | Static | Dynamic | Static | Dynamic |
| Reference Screen | | | | | | |
| R1 | 1200 | 1*10¹⁵ | 0.49 | 0.32 | 0.44 | 0.30 |

| C₄F₉SO₃⁻Li⁺ | | | | | | |
|---|---|---|---|---|---|---|
| N1 | 56 | 7.0*10¹² | 0.43 | 0.28 | 0.32 | 0.30 |
| N2 | 48 | 6.0*10¹² | 0.43 | 0.32 | 0.40 | 0.32 |
| N3 | 40 | 7.3*10¹¹ | 0.37 | 0.25 | 0.32 | 0.27 |

The data of Table 2 clearly show that the addition of the lithium fluoroalkylsulfonate salt in the intensifying screens of the present invention dramatically improves the antistatic characteristics (decay time value is reduced of more than 95% and surface resistivity value is reduced of from two to three orders of magnitude) with minimal adverse effect on the slipperiness characteristics of the film/screen system.

## Claims

1. An X-ray intensifying screen comprising a support, a fluorescent layer coated thereon which comprises fluorescent phosphor particles dispersed in a binder, and a protective top-coat layer covering said fluorescent layer, characterized in that at least one of said fluorescent and top-coat layers comprises at least one salt selected from the group consisting of fluoroalkylsulfonate salts.

2. The X-ray intensifying screen according to claim 1, wherein said fluoroalkylsulfonate salts are represented by the following formula:
Rf-SO₃⁻ M⁺
wherein M is an organic or inorganic cation, and Rf is a highly fluorinated alkyl group having 1 to 18 carbon atoms.

3. The X-ray intensifying screen according to claim 2, wherein M is an alkaline metal, an alkaline-earth metal, or a nitrogen onium cation.

4. The X-ray intensifying screen according to claim 1, wherein said fluoroalkylsulfonate salts are selected from the group consisting of lithium fluoroalkylsulfonate salts.

5. The X-ray intensifying screen according to claim 4, wherein said lithium fluoroalkylsulfonate salts are represented by the following formula:
Rf-SO₃⁻ Li⁺
wherein Rf is a highly fluorinated alkyl group having 1 to 8 carbon atoms.

6. The X-ray intensifying screen according to claim 1, wherein said fluoroalkylsulfonate salts are added at a coating weight of from 0.01 to 20 g/m².

7. The X-ray intensifying screen according to claim 1, wherein said fluoroalkylsulfonate salts are added at a coating weight of from 0.1 to 10 g/m².

8. The X-ray intensifying screen according to claim 1, wherein said fluoroalkylsulfonate salts are added at a coating weight of from 1 to 5 g/m².

9. The X-ray intensifying screen according to claim 1, wherein said fluoroalkylsulfonate salt is added to both said fluorescent and top-coat layers.

10. The X-ray intensifying screen according to claim 9, wherein the fluoroalkylsulfonate salt coating weight ratio between said fluorescent and top-coat layers is from 1:1 to 1:10.

## Patentansprüche

1. Verstärkungsschirm für Röntgenstrahlen, umfassend einen Träger, eine darauf aufgetragene Fluoreszenzschicht, welche in Bindemittel dispergierte Fluoreszenz-Leuchtstoffteilchen umfaßt, und eine Schutzdeckschicht, die die Fluoreszenzschicht bedeckt, dadurch gekennzeichnet, daß wenigstens die Fluoreszenz- oder die Schutzdeckschicht wenigstens eines aus der Gruppe der Fluoralkylsulfonat-Salze ausgewähltes Salz umfaßt.

2. Verstärkungsschirm für Röntgenstrahlen gemäß Anspruch 1, wobei die Fluoralkylsulfonat-Salze folgende Formel aufweisen:
Rf-SO₃⁻ M⁺
wobei M ein organisches oder anorganisches Kation und Rf eine hochfluorierte Alkylgruppe mit 1 bis 18 Kohlenstoffatomen ist.

3. Verstärkungsschirm für Röntgenstrahlen gemäß Anspruch 2, wobei M ein Alkalimetall-, Erdalkalimetall-, oder ein stickstoffhaltiges Oniumkation ist.

4. Verstärkungsschirm für Röntgenstrahlen gemäß Anspruch 1, wobei die Fluoralkylsulfonat-Salze aus der Gruppe der Lithium-Fluoralkylsulfonat-Salze ausgewählt werden.

5. Verstärkungsschirm für Röntgenstrahlen gemäß Anspruch 4, wobei die Lithium-Fluoralkylsulfonat-Salze folgende Formel aufweisen:
Rf-SO₃⁻ Li⁺
wobei Rf eine hochfluorierte Alkylgruppe mit 1 bis 8 Kohlenstoffatomen ist.

6. Verstärkungsschirm für Röntgenstrahlen gemäß Anspruch 1, wobei die Fluoralkylsulfonat-Salze mit einem Gewicht von 0,01 bis 20 g/m² in der Schicht hinzugefügt werden.

7. Verstärkungsschirm für Röntgenstrahlen gemäß Anspruch 1, wobei die Fluoralkylsulfonat-Salze mit einem Gewicht von 0,1 bis 10 g/m² in der Schicht hinzugefügt werden.

8. Verstärkungsschirm für Röntgenstrahlen gemäß Anspruch 1, wobei die Fluoralkylsulfonat-Salze mit einem Gewicht von 1 bis 5 g/m² in der Schicht hinzugefügt werden.

9. Verstärkungsschirm für Röntgenstrahlen gemäß Anspruch 1, wobei die Fluoralkylsulfonat-Salze sowohl der Fluoreszenz- als auch der Schutzdeckschicht hinzugefügt werden.

10. Verstärkungsschirm für Röntgenstrahlen gemäß Anspruch 9, wobei das Verhältnis des Gewichts der Fluoralkylsulfonat-Salze in der Schicht zwischen der Fluoreszenz- und der Schutzdeckschicht 1:1 bis 1:10 beträgt.

## Revendications

1. Ecran intensificateur de rayons X comprenant un support, une couche fluorescente déposée sur celui-ci, comprenant des particules fluorescentes de matière luminescente dispersées dans un liant, et une couche de revêtement supérieure protectrice recouvrant ladite couche fluorescente, caractérisé en ce qu'au moins l'une desdites couches fluorescente et de revêtement supérieure, comprend au moins un sel choisi parmi les sels de type fluoroalkylsulfonate.

2. Ecran intensificateur de rayons X selon la revendication 1, dans lequel lesdits sels de type fluoroalkylsulfonate sont représentés par la formule suivante :
Rf-SO₃⁻M⁺
dans laquelle M représente un cation organique ou inorganique, et Rf représente un groupe alkyle fortement fluoré contenant de 1 à 18 atomes de carbone.

3. Ecran intensificateur de rayons X selon la revendication 2, dans lequel M représente un métal alcalin, un métal alcalino-terreux ou un cation azoté de type onium.

4. Ecran intensificateur de rayons X selon la revendication 1, dans lequel lesdits sels de type fluoroalkylsulfonate sont choisis parmi les sels de type fluoroalkylsulfonate de lithium.

5. Ecran intensificateur de rayons X selon la revendication 4, dans lequel lesdits sels de type fluoroalkylsulfonate de lithium sont représentés par la formule suivante :
Rf-SO₃⁻Li⁺
dans laquelle Rf représente un groupe alkyle fortement fluoré contenant de 1 à 8 atomes de carbone.

6. Ecran intensificateur de rayons X selon la revendication 1, dans lequel lesdits sels de type fluoroalkylsulfonate sont ajoutés selon un poids de revêtement de 0,01 à 20 g/m².

7. Ecran intensificateur de rayons X selon la revendication 1, dans lequel lesdits sels de type fluoroalkylsulfonate sont ajoutés selon un poids de revêtement de 0,1 à 10 g/m².

8. Ecran intensificateur de rayons X selon la revendication 1, dans lequel lesdits sels de type fluoroalkylsulfonate sont ajoutés selon un poids de revêtement de 1 à 5 g/m².

9. Ecran intensificateur de rayons X selon la revendication 1, dans lequel ledit sel de type fluoroalkylsulfonate est ajouté dans les deux couches fluorescente et de revêtement supérieure.

10. Ecran intensificateur de rayons X selon la revendication 9, dans lequel le rapport pondéral de revêtement de sel de type fluoroalkylsulfonate entre les couches fluorescente et de revêtement supérieure, est de 1:1 à 1:10.
